# EUROPEAN PATENT SPECIFICATION

(11) **EP 3 211 912 B1**
(45) Date of publication and mention of the grant of the patent: **25.12.2019**
(21) Application number: 16186771.8
(22) Date of filing: 01.09.2016
(51) Int. Cl.: H04N 21/845, H04N 21/61, H04N 21/2385, H04N 21/414, H04N 21/2343, H04N 21/262, H04N 21/234, H04N 21/84, H04N 21/6373

(54) **INFORMATION PROCESSING APPARATUS**
INFORMATIONSVERARBEITUNGSVORRICHTUNG
APPAREIL DE TRAITEMENT D'INFORMATIONS

(30) Priority: 29.02.2016 JP 2016036944
(43) Date of publication of application: 30.08.2017
(73) Proprietor: FUJI XEROX CO., LTD, Minato-ku Tokyo (JP)
(72) Inventor: FUJII, Akira, Yokohama-shi, Kanagawa (JP); MURALI, Suresh, Yokohama-shi, Kanagawa (JP)
(74) Representative: Haseltine Lake Kempner LLP

(56) References cited:
- WO-A1-2014/158264
- US-A1- 2014 040 959
- US-A1- 2015 026 358
- US-B1- 9 253 229
- YITING LIAO ET AL: "Experiment Results of Quality Driven DASH", 104. MPEG MEETING; 22-4-2013 - 26-4-2013; INCHEON; (MOTION PICTURE EXPERT GROUP OR ISO/IEC JTC1/SC29/WG11),, no. m29247, 17 April 2013 (2013-04-17), XP030057779,
- YITING LIAO ET AL: "Enhancing Video Quality Management in MPEG DASH", 102. MPEG MEETING; 15-10-2012 - 19-10-2012; SHANGHAI; (MOTION PICTURE EXPERT GROUP OR ISO/IEC JTC1/SC29/WG11),, no. m26892, 10 October 2012 (2012-10-10), XP030055225,
- SHAOBO ZHANG ET AL: "23009-3:Proposed Text on Quality Driven Streaming", 106. MPEG MEETING; 28-10-2013 - 1-11-2013; GENEVA; (MOTION PICTURE EXPERT GROUP OR ISO/IEC JTC1/SC29/WG11),, no. m31501, 23 October 2013 (2013-10-23), XP030059953,

## Description

### BACKGROUND

### Technical Field

The present invention relates to an information processing apparatus.

### Related Art

In a technique of playing back a stream-delivered video in a streaming manner, the playback quality such as an image quality level of a video and continuity in a playback (a playback without interruption) is important. In order to improve the playback quality, JP 2004-88480 A, for example, discloses a technique of varying information amount of an image encode signal that is transferred according to a line speed of a packet communication network. United States patent publication US2015/0026358(A1) discloses a streaming client configured to select a streaming segment based on metadata about image quality. Document US 9,253,229 B1 discloses to adapt a streaming bit rate according to a size of video display window on a screen of a streaming client device.

### SUMMARY

A technique of preparing plural videos having different bit rates and delivering a video at a bit rate that is dynamically determined in a streaming manner (for example, Moving Picture Experts Group (MPEG)-Dynamic Adaptive Streaming over HTTP (DASH) or the like) is known. In this technique, there are cases where a video at a new bit rate is generated by converting a bit rate of an original video and used, but the converted video particularly may include a frame in which an image quality is remarkably bad (for example, a monochrome image is displayed instead of a color image, or a block noise occurs) particularly in a case where the bit rate is low. If the bit rate is determined in view of only a bandwidth (line speed), for example, such that the bit rate increases as the bandwidth increases, as the bandwidth decreases, the bit rate decreases accordingly, and the image quality of the video that is played back may get worse, which may result in a lower playback quality.

In this regard, an object of at least embodiments of the present invention is enabling to use a bit rate at which the playback quality is improved compared to a case where the bit rate is determined in view of only the bandwidth. Aspects of the invention are set out in the claims.

According to the information processing apparatus of claim 1, it is possible to use a bit rate at which the playback quality is improved compared to a case where the bit rate is determined in view of only the bandwidth.

According to the information processing apparatus of claims 2-3, it is possible to more accurately indicate whether the image quality is high or low compared to a case where the videos are not compared.

According to the information processing apparatus of claim 4, it is possible to indicate a difference in the image quality between the segments for all the videos generated by performing a bit rate conversion on an original video.

According to the information processing apparatus of claim 1, it is possible to improve the image quality of the video that is played back compared to a case where the image quality information is not considered.

According to the information processing apparatus of claim 5, it is possible to prevent the video of the image quality that does not satisfy the image quality condition from being played.

According to the information processing apparatus of claim 6, it is possible to cause the playback of the video to be less interrupted compared to a case where the bandwidth is not considered.

### BRIEF DESCRIPTION OF DRAWINGS

Exemplary embodiments of the present invention will be described in detail based on the following figures, wherein:
Fig. 1 is a diagram illustrating an overall configuration of a video delivery system according to an exemplary embodiment;
Fig. 2 is a diagram illustrating a streaming delivery mechanism;
Fig. 3 is a diagram illustrating a hardware configuration of a smart phone;
Fig. 4 is a diagram illustrating a hardware configuration of a video delivering apparatus;
Fig. 5 is a diagram illustrating functional configurations implemented by respective apparatuses;
Fig. 6 is a diagram illustrating an exemplary stored evaluation result and the like;
Figs. 7A to 7C are diagrams illustrating an exemplary video displayed on a display region;
Fig. 7B is a diagram illustrating an exemplary video displayed on a display region;
Fig. 8 is a diagram illustrating an exemplary bit rate table;
Fig. 9 is a diagram illustrating an exemplary initial operation process in a streaming delivery process;
Fig. 10 is a diagram illustrating an exemplary operation process after an initial bit rate is designated;
Fig. 11 is a diagram illustrating an overall configuration of a video delivery system according to a modified example;
Fig. 12 is a diagram illustrating a hardware configuration of a server apparatus; and
Fig. 13 is a diagram illustrating functional configurations implemented by respective apparatuses according to a modified example.

### DETAILED DESCRIPTION

### [1] Exemplary embodiments

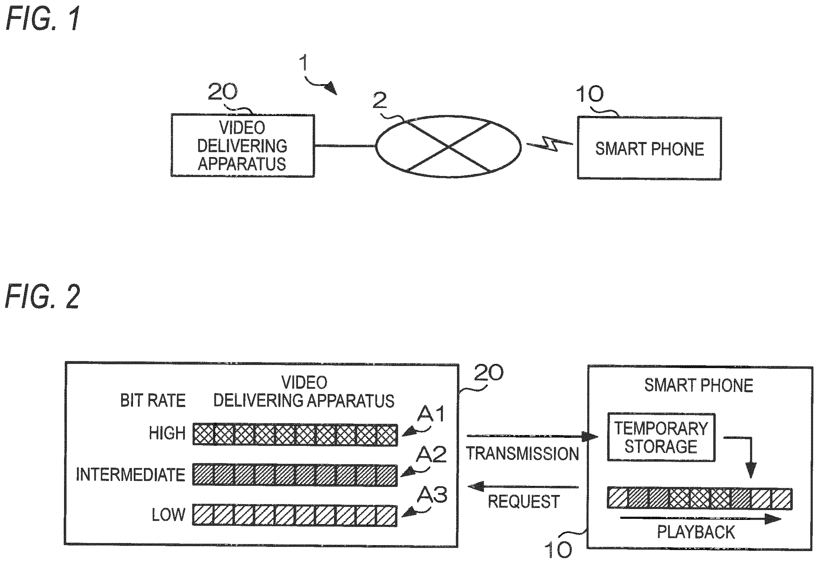

Fig. 1 illustrates an overall configuration of a video delivery system 1 according to an exemplary embodiment. The video delivery system 1 is a system that performs delivery of a video to a playback apparatus used by a user in a streaming manner. The streaming delivery of the video refers to delivery of a video in a manner where a video is divided into plural segments and segment data indicating a video of each segment are sequentially played back while the segment data is transceived in a playback order. For example, the segment data is data indicating data of an segment of about 1 to 10 seconds.

The video delivery system 1 includes a communication line 2, a smart phone 10, and a video delivering apparatus 20. The communication line 2 is a system in which exchange of data is relayed between apparatuses such as a mobile communication network or the Internet. The smart phone 10 is connected to the communication line 2 in a wireless manner, and the video delivering apparatus 20 is connected to the communication line 2 in a wired manner (it is an example, and they may be connected by any of wireless and wired manners).

The smart phone 10 is a playback device that plays back a video that is delivered in a streaming manner in the video delivery system 1. The smart phone 10 is carried by the user and used in various places. The video delivering apparatus 20 is an information processing apparatus that stores plural pieces of segment data indicating one video as a whole and performs streaming delivery of a video by sequentially transmitting the segment data in the playback order.

In the video delivery system 1, a video that conforms to a standard called, for example, MPEG-DASH and has a bit rate that can be changed during the playback thereof is delivered in the streaming manner. In the streaming delivery of the exemplary embodiment, plural bit rates are prepared in advance.

Fig. 2 illustrates a streaming delivery mechanism. The video delivering apparatus 20 according to the exemplary embodiment stores segment data groups A1, A2, and A3 indicating videos having "high," "intermediate," and "low" bit rates, respectively. The bit rate refers to a data amount (having a unit of megabits per seconds (Mbps) or megabytes (MB/sec)) that is transceived at intervals of one second. In the videos indicated by the segment data groups, as the bit rate increases, the resolution and the frame rate of the video are assumed to increase.

The smart phone 10 designates the bit rate of the video to be delivered in requesting the streaming delivery of the video. The video delivering apparatus 20 sequentially reads the segment data from the segment data group of the designated bit rate, and transmits the read segment data. The smart phone 10 temporarily stores (caches) the received segment data, and reads and plays back the cached segment data.

Further, in a case where the smart phone 10 designates a different bit rate from that of a video being played back during the playback of the video and requests delivery of segment data at the different bit rate, the video delivering apparatus 20 receives the request, and transmits the segment data at the designated new bit rate. Upon receiving the segment data, the smart phone 10 plays back the video indicated by the segment data at the new bit rate, subsequently to the video indicated by the segment data at the current bit rate. As described above, the segment data groups A1, A2, and A3 indicate the video in which plural segments are sequentially delivered in the streaming manner, and the bit rate can be varied during the playback. One of the features of the exemplary embodiment of the present invention lies in the bit rate determination method. The determination method will be described later in detail.

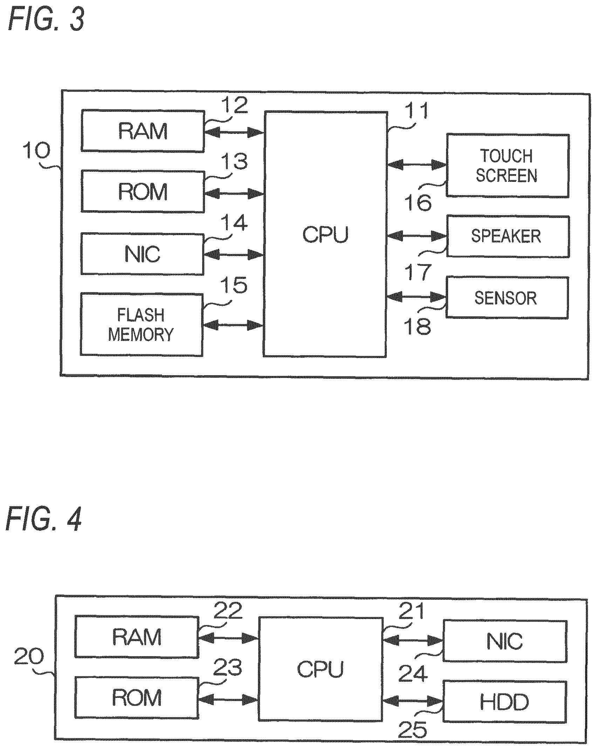

Fig. 3 illustrates a hardware configuration of the smart phone 10. The smart phone 10 is a computer that includes a central processing unit (CPU) 11, a random access memory (RAM) 12, a read only memory (ROM) 13, a network interface card (NIC) 14, a flash memory 15, a touch screen 16, a speaker 17, and a sensor 18. The CPU 11 controls operations of the respective units by executing a program stored in the ROM 13 or the flash memory 15 using the RAM 12 as a work area. The NIC 14 includes an antenna, a communication circuit, and the like, and performs wireless communication that conforms to, for example, a mobile communication standard.

The flash memory 15 stores data and a program that the CPU 11 uses for control. In this exemplary embodiment, a browser program is included as the program, and a function of the present invention that will be described later is implemented by Java (a registered trademark) script executed on the browser. The exemplary embodiment of the present invention is not limited to this, and an application program that implements the function of the present invention may be stored. The touch screen 16 includes a display serving as a display unit and a touch panel installed on the surface of the display, and displays an image and receives an operation from the user. The speaker 17 converts audio data indicating a sound into an analog signal and outputs a sound. The sensor 18 is, for example, a three-axis geomagnetic sensor, and supplies data indicating an inclination of its own apparatus to the CPU 11.

Fig. 4 illustrates a hardware configuration of the video delivering apparatus 20. The video delivering apparatus 20 is a computer that includes a CPU 21, a RAM 22, a ROM 23, a NIC 24, and a hard disk drive (HDD) 25. The CPU 21 to the ROM 23 are the same hardware as the components having the same names illustrated in Fig. 3. The NIC 24 includes a communication circuit, and performs communication through the communication line 2. The HDD 25 stores data and a program which the CPU 21 uses for control.

By controlling the respective units by executing the programs through the CPUs of the respective apparatuses included in the video delivery system 1, functions to be described below are implemented.

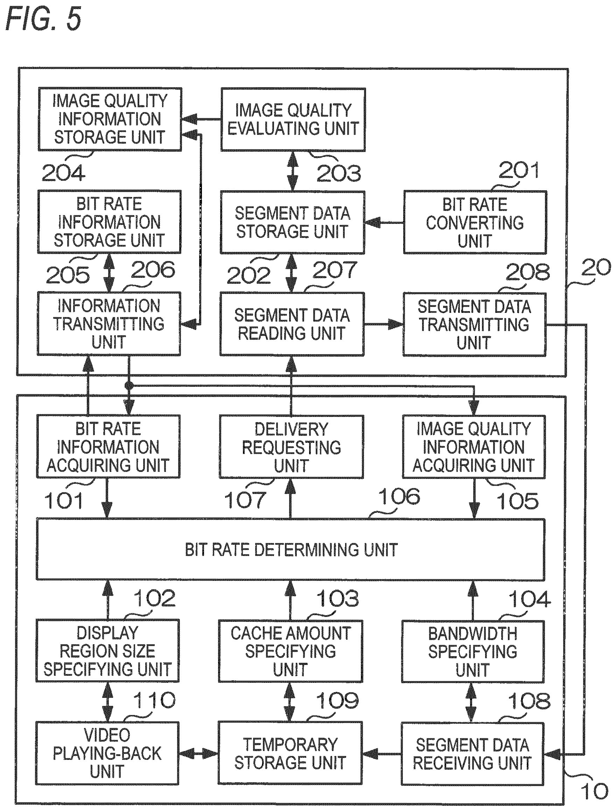

Fig. 5 illustrates functional configurations implemented by the respective apparatuses. The smart phone 10 includes a bit rate information acquiring unit 101, a display region size specifying unit 102, a cache amount specifying unit 103, a bandwidth specifying unit 104, an image quality information acquiring unit 105, a bit rate determining unit 106, a delivery requesting unit 107, a segment data receiving unit 108, a temporary storage unit 109, and a video playing-back unit 110. The video delivering apparatus 20 includes a bit rate converting unit 201, a segment data storage unit 202, an image quality evaluating unit 203, an image quality information storage unit 204, a bit rate information storage unit 205, an information transmitting unit 206, a segment data reading unit 207, and a segment data transmitting unit 208.

In a case where the original video from which the videos at the plural bit rates derive is stored in the video delivering apparatus 20, the bit rate converting unit 201 of the video delivering apparatus 20 converts the bit rate of the video. In this exemplary embodiment, the bit rate converting unit 201 converts the bit rate by decreasing either or both of the resolution and the frame rate of the original video. In this exemplary embodiment, the bit rate converting unit 201 converts the original video whose bit rate is 4.0 Mbps to videos at six bit rates such as 2.0 Mbps, 1.0 Mbps, 0.8 Mbps, 0.6 Mbps, 0.4 Mbps, and 0.2 Mbps.

As described above, the video that is delivered in the streaming manner in this system is indicated by the videos at the plural bit rates (in this exemplary embodiment, the videos at the six bit rate of 0.3 Mbps to 2.0 Mbps) generated by performing bit rate conversion on the original video. In other words, in this system, the segment data of the designated bit rate among the segment data indicating the videos of the plural bit rates is actually delivered. The segment data of the original video may be delivered, but in this exemplary embodiment, the segment data of the original video is assumed to be used only for the bit rate conversion but not to be delivered.

In this exemplary embodiment, in order to reduce the data usage, for example, the video indicated by the segment data encoded (compressed) as data indicating a reference frame set for each of the segments of the video and a difference with the frame is used as the original video. The bit rate converting unit 201 generates new segment data having the converted bit rate from each of the segment data of the original video. The bit rate converting unit 201 provides the segment data storage unit 202 with the segment data at each bit rate that are generated.

The segment data storage unit 202 stores the segment data of the video that is delivered in the streaming manner by video delivering apparatus 20. The segment data storage unit 202 stores the segment data indicating the videos at the plural bit rates provided from the bit rate converting unit 201.

The image quality evaluating unit 203 of the video delivering apparatus 20 may evaluate the image quality of the video that has been subject to the bit rate conversion before segmented or may evaluate the image quality of the video indicated by the segment data stored in the segment data storage unit 202. For example, the image quality evaluating unit 203 performs the evaluation by comparing the segment of the video of the reference bit rate with the segment of the video of the bit rate to be evaluated. In this exemplary embodiment, the image quality evaluating unit 203 evaluates the image quality of the video using the highest bit rate (in the above example, 2.0 Mbps) among the variable bit rates in the streaming delivery of the video as the reference bit rate.

In a case where the bit rate conversion is performed, as the bit rate is decreased, the image quality is easily lowered. For example, a color image is more likely to be displayed as a monochrome image or a block noise is more likely to be generated. In this regard, the image quality evaluating unit 203 compares frames of common scenes in a common segment of a reference video and a comparative video, and evaluates the image quality according to a degree of difference between the frame of the video to be evaluated and the frame of the reference video. This comparison may be performed for a single frame or for two or more frames (including all frames) in each segment.

The image quality evaluating unit 203 evaluates the image quality based on a difference between frames, for example, using a known technique such as a mean square error (MSE) technique, a peak signal to noise ratio (PSNR) technique, a structural similarity (SSIM) technique, or a color histogram technique. The image quality evaluating unit 203 indicates an evaluation result, for example, using values of 0 to 1. 1 indicates that there is no difference with the reference image, and the image quality is high. As the value decreases, the difference with the reference image increases, and the image quality decreases. In other words, the evaluation of the image quality by the image quality evaluating unit 203 is under the assumption that the reference video that is used has the bit rate and the image quality higher than the comparative video. The image quality evaluating unit 203 provides the image quality information storage unit 204 with each evaluation result.

The image quality information storage unit 204 stores image quality information indicating the image quality of the video evaluated by the image quality evaluating unit 203. The image quality information storage unit 204 stores the evaluation result provided from the image quality evaluating unit 203 such that the bit rate and the segment corresponding to each other are associated with each other.

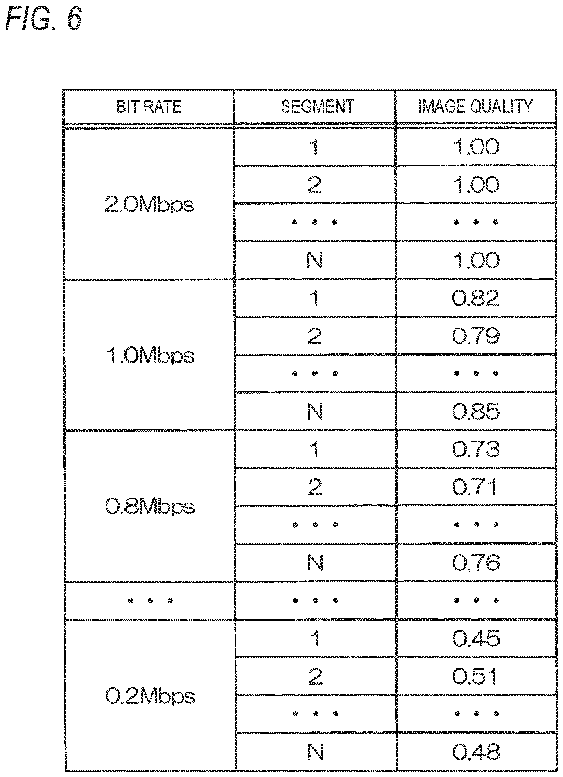

Fig. 6 illustrates an exemplary stored evaluation result and the like. In an example of Fig. 6, the image qualities of a "1st" segment to an "N-th" segment of the bit rates of "2.0 Mbps", "1.0 Mbps",..., and "0.2 Mbps" are illustrated.

Since "2.0 Mbps" is the reference bit rate, all the segments at 2.0 Mbps have the image quality of "1.00." For "1.0 Mbps," a first segment has the image quality of "0.82," a second segment the image quality of "0.79," and an N-th segment the image quality of "0.85." For "0.8 Mbps," a first segment has the image quality of "0.73," a second segment the image quality of "0.71," and an N-th segment the image quality of "0.76." For "0.2 Mbps," a first segment has the image quality of "0.45," a second segment the image quality of "0.51," and an N-th segment the image quality of "0.39." As described above, as the bit rate is decreased, the image quality is likely to be decreased. Further, a degree of decrease in the image quality differs according to each segment.

The bit rate information storage unit 205 stores bit rate information (for example, a media presentation description (MPD) in MPEG-DASH) indicating the plural bit rates of the video indicated by the segment data stored in the segment data storage unit 202, that is, the video that is delivered in the streaming manner by the video delivering apparatus 20. In this exemplary embodiment, the bit rate information storage unit 205 stores the bit rate information indicating the six bit rates (2.0 Mbps, 1.0 Mbps, 0.8 Mbps, 0.6 Mbps, 0.4 Mbps, and 0.2 Mbps). For example, in a case where the segment data of the video is stored by an operator of the video delivering apparatus 20, the bit rate information is created and stored by the operator.

In requesting the streaming delivery of the video, the bit rate information acquiring unit 101 of the smart phone 10 acquires the bit rate information indicating the plural bit rates of the video. For example, a link to the video that is delivered in the streaming manner by the video delivering apparatus 20 is attached in a web page displayed on the smart phone 10, and in a case where the user performs an operation of selecting the link, the bit rate information acquiring unit 101 transmits request data for requesting the bit rate information of the video to the video delivering apparatus 20. The request data includes information (for example, a uniform resource locator (URL) of a file (for example, an MPD in MPEG-DASH)) specifying the video.

Upon receiving the request data transmitted from the smart phone 10, the information transmitting unit 206 of the video delivering apparatus 20 reads the bit rate information of the video specified by the request data, that is, the bit rate information of the video stored in the video delivering apparatus 20 from the bit rate information storage unit 205 and transmits the read bit rate information of the video to the smart phone 10 serving as the request source. At this time, the information transmitting unit 206 reads the image quality information of the video from the image quality information storage unit 204, and transmits the read image quality information of the video to the smart phone 10 together with the bit rate information. The bit rate information acquiring unit 101 acquires the bit rate information transmitted as described above, and provides the bit rate determining unit 106 with the acquired bit rate information.

The image quality information acquiring unit 105 acquires the image quality information transmitted as described above, that is, information indicating the image quality of each segment at each of the bit rates of the video that is delivered in the streaming manner. In this exemplary embodiment, as described above, the image quality information acquiring unit 105 acquires the evaluated image quality information using the highest bit rate among the variable bit rates in the streaming delivery of the video as the reference bit rate. The image quality information acquiring unit 105 provides the bit rate determining unit 106 with the acquired image quality information.

The bit rate determining unit 106 determines any one of the plural bit rates indicated by the bit rate information acquired by the bit rate information acquiring unit 101 as the bit rate of the video to be played back. The bit rate determination method will be described later in detail. The bit rate determining unit 106 repeatedly determines the bit rate at predetermined time intervals. For example, an interval of a time (for example, an interval of one second in a case where a segment of the video is 2 seconds or the like) shorter than the segment of the video indicated by one segment data is used as the time interval. Each time the bit rate is determined, the bit rate determining unit 106 notifies the delivery requesting unit 107 of the determined bit rate.

The delivery requesting unit 107 requests an apparatus (the video delivering apparatus 20 in this exemplary embodiment) that delivers the video in the streaming manner to delivers the video in the streaming manner at the bit rate determined by the bit rate determining unit 106. In a case where the bit rate determined by the bit rate determining unit 106 is changed, the bit rate of the video that the delivery requesting unit 107 requests to deliver in the streaming manner is also changed.

In a case where the streaming delivery of the video is requested from an external apparatus, the segment data reading unit 207 of the video delivering apparatus 20 reads the segment data of the requested video. Upon receiving designation data transmitted from the smart phone 10, the segment data reading unit 207 reads a set number of pieces of segment data from the segment data group of the bit rate designated by the designation data in order from the beginning of the video.

Thereafter, the segment data reading unit 207 repeatedly performs the process of reading a set number of pieces of segment data subsequently to the read segment data at intervals of a playback time of a part of the video indicated by the segment data that is read one time or a time shorter than the playback time of the part. In a case where the designated bit rate is changed in the middle, the segment data reading unit 207 reads a set number of pieces of segment data from a part from which a playback position is continued among the segment data of the new bit rate. Each time the segment data is read, the segment data reading unit 207 provides the segment data transmitting unit 208 with the read segment data.

The segment data transmitting unit 208 transmits the provided segment data to the designation data transmission source, that is, the request source (the smart phone 10 in this exemplary embodiment) that has requested the streaming delivery of the video. The segment data receiving unit 108 of the smart phone 10 receives the segment data transmitted from the video delivering apparatus 20. The segment data receiving unit 108 the temporary storage unit 109 with the received segment data.

The temporary storage unit 109 temporarily stores the segment data received by the segment data receiving unit 108 until the part of the video indicated by the segment data is played back. In a case where the segment data is stored in the temporary storage unit 109, the video playing-back unit 110 sequentially reads the stored segment data, and sequentially plays back the video indicated by the read segment data. Since the segment data is encoded as described above, the video playing-back unit 110 decodes and plays back the segment data. The video playing-back unit 110 causes the played-back video to be displayed on a display region but causes the video to be displayed on a different display region according to a direction of its own apparatus.

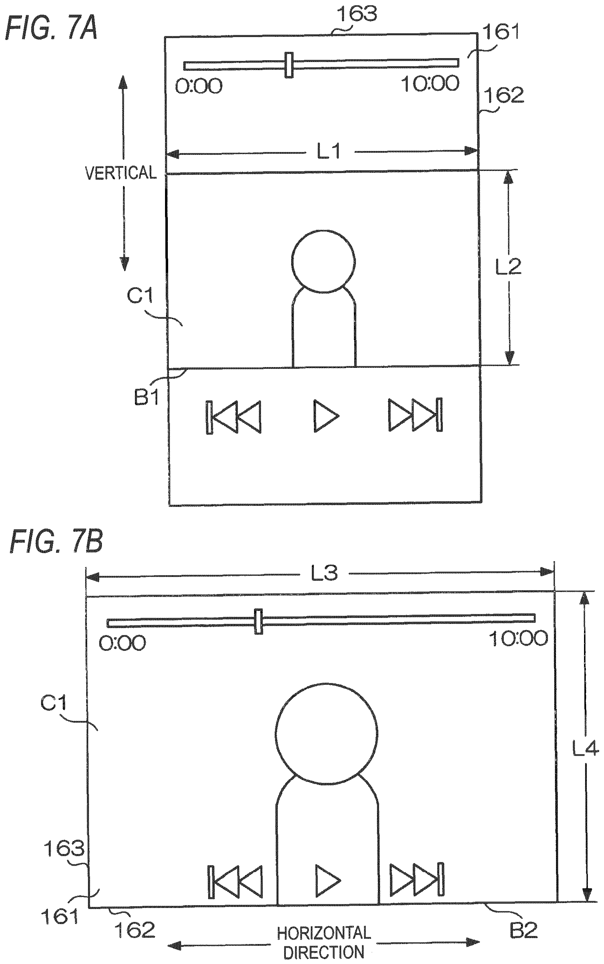

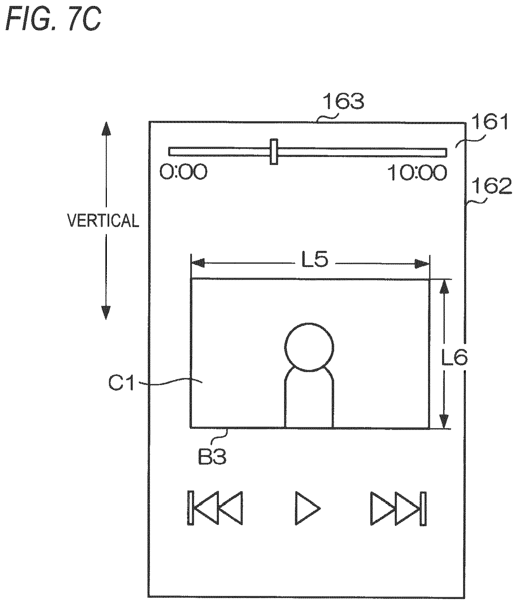

Figs. 7A and 7B illustrate an exemplary video displayed on the display region. In Figs. 7A and 7B, the video is displayed on a display surface 161 of the touch screen 16 illustrated in Fig. 2. The display surface 161 is a rectangular surface surrounded by long sides 162 and short sides 163. Fig. 7A illustrates a display region B1 in a case where the smart phone 10 is disposed so that the long side 162 of the display surface 161 is along the vertical direction, and Fig. 7B illustrates a display region B2 in a case where the smart phone 10 is disposed so that the long side 162 of the display surface 161 is along the horizontal direction. Fig. 7C illustrates a display region B3 in which a long side and a short side do not contact with the long side 162 and the short side 163 of the display surface 161 in a part of the display surface 161. A video C1 in which a person is shown is displayed on all the display regions B1, B2, and B3. As described above, the video playing-back unit 110 causes the video to be displayed on the display region B1, B2, or B3 according to a size of a video playback window of the smart phone 10.

The display region size specifying unit 102 of the smart phone 10 specifies the size of the display region of the video that is delivered in the streaming manner. The display region size specifying unit 102 transmits an inquiry about a type of the display region (one of the display regions B1 to B3) in which the video is displayed to the video playing-back unit 110. Upon receiving the inquiry, the video playing-back unit 110 notifies the display region size specifying unit 102 of the type of the display region in which the video is displayed. The display region size specifying unit 102 specifies the size corresponding to the type of the display region that is notified of as the size of the display region.

In a case where the display region B1 is notified of as the type of the display region, the display region size specifying unit 102 specifies a value obtained by multiplying a length L1 of the long side by a length L2 of the short side illustrated in Fig. 7A, that is, an area of the display region as the size of the display region. Further, in a case where the display region B2 is notified of as the type of the display region, the display region size specifying unit 102 specifies a value obtained by multiplying a length L3 of the long side by a length L4 of the short side illustrated in Fig. 7B as the size of the display region. Further, in a case where the display region B3 is notified of as the type of the display region, the display region size specifying unit 102 specifies a value obtained by multiplying a length L5 of the long side and a length L6 of the short side of the display region B3 as the display region size. The display region size specifying unit 102 provides the bit rate determining unit 106 with size information (information indicating the area of the display region in this exemplary embodiment) indicating the size of the display region specified as described above.

The cache amount specifying unit 103 of the smart phone 10 specifies a cache amount in the streaming playback, that is, a data amount of the segment data that is temporarily stored for a position that is currently played back in the video that is played back in the streaming manner. The cache amount specifying unit 103 refers to the segment data that is temporarily stored in the temporary storage unit 109, and specifies a playback time in which the segment data that is referred to is played back as the cache amount. For example, in a case where the cached segment data indicates a video of 2 seconds, the cache amount specifying unit 103 specifies that the video of 2 seconds is cached, and provides to the bit rate determining unit 106 with information indicating the number of seconds as cache amount information.

The bandwidth specifying unit 104 of the smart phone 10 specifies a network bandwidth in reception of the segment data of the video that is delivered in the streaming manner. The bandwidth specifying unit 104 is an example of a "specifying unit" according to the exemplary embodiment of the present invention. The bandwidth specifying unit 104 monitors the segment data receiving unit 108, and specifies a data size of the segment data that is received per unit time by the segment data receiving unit 108 as the bandwidth. For example, in a case where the segment data of 10 megabits is received for one second, the segment data receiving unit 108 specifies 10 Mbps as the bandwidth. The segment data receiving unit 108 provides the bit rate determining unit 106 with bandwidth information indicating the specified bandwidth.

The display region size specifying unit 102, the cache amount specifying unit 103, and the bandwidth specifying unit 104 perform the specifying process at the same time intervals as the time intervals at which the bit rate determining unit 106 repeatedly determines the bit rate in this exemplary embodiment.

The bit rate determining unit 106 determines the bit rate of the video that is played back based on the size of the display region specified by the display region size specifying unit 102, the cache amount specified by the cache amount specifying unit 103, the bandwidth specified by the bandwidth specifying unit 104, and the image quality information acquired by the image quality information acquiring unit 105. First, the bit rate determining unit 106 determines a bit rate candidate based on the size of the display region, the cache amount, and the bandwidth. The bit rate candidate is an example of a "first bit rate" according to the exemplary embodiment of the present invention. For example, the bit rate determining unit 106 uses a bit rate table in which the size of the display region is associated with a bit rate range.

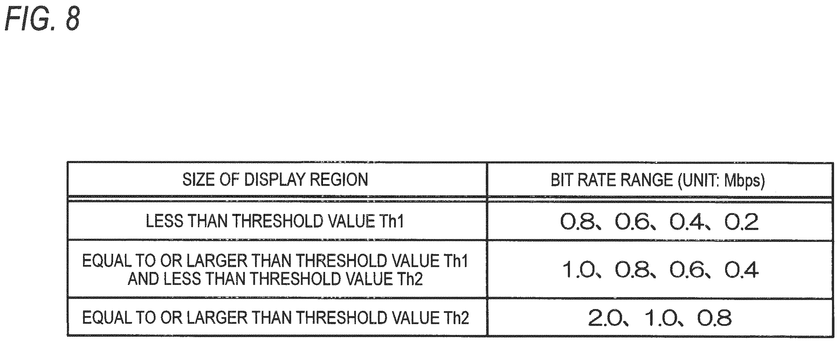

Fig. 8 illustrates an exemplary bit rate table. In an example of Fig. 8, a bit rate range of "0.8, 0.6, 0.4, 0.2" (whose unit is all Mbps) is associated with a size of the display region of "less than threshold value Thl." A bit rate range of "1.0, 0.8, 0.6, 0.4" is associated with a size of the display region of "equal to or larger than threshold value Th1 and less than threshold value Th2," and a bit rate range of "2.0, 1.0, 0.8" is associated with a size of the display region of "equal to or larger than threshold value Th2."

The bit rate determining unit 106 reads the bit rate range associated with the size of the display region specified by the display region size specifying unit 102 from the bit rate table. The bit rate determining unit 106 narrows the read bit rate range down to a range that does not exceed the bandwidth specified by the bandwidth specifying unit 104. For example, in a case where the size of the display region less than the threshold value Th1 is specified, the bit rate determining unit 106 reads the bit rate range of "0.8, 0.6, 0.4, 0.2," and in a case where the bandwidth of 0.7 Mbps is specified, since the bit rate of 0.8 Mbps exceeds the specified bandwidth, the bit rate determining unit 106 narrows the bit rate range down to "0.6, 0.4, 0.2."

In a case where a playback time in which the video indicated by the segment data temporarily stored by the cache amount specified by the cache amount specifying unit 103 (hereinafter, referred to as a "cache playback time") is played back is equal to or larger than a set threshold value Th3, the bit rate determining unit 106 selects any one of the bit rates of up to a set number in a descending order in the narrowed-down range and determines the selected bit rate as the bit rate candidate. In this exemplary embodiment, the bit rate determining unit 106 regards 1 as the set number, that is, selects the highest bit rate and determines the highest bit rate as the bit rate candidate. In a case where the narrowed-down range is "0.6, 0.4, 0.2" as in the above example, the bit rate determining unit 106 determines "0.6" which is the highest bit rate among them as the bit rate candidate.

Further, in a case where the cache playback time is less than the threshold value Th3, the bit rate determining unit 106 selects any one of the bit rates of up to a set number in an ascending order in the narrowed-down range, and determines the selected bit rate as the bit rate candidate. In this exemplary embodiment, a number that causes all the bit rates excluding the highest bit rate to be included is set. Thus, the bit rate determining unit 106 selects any one of the bit rates excluding the highest one in the narrowed-down range, and determines the selected bit rate as the bit rate candidate.

In a case where the narrowed-down range is "0.6, 0.4, 0.2" as in the above-described example, the bit rate determining unit 106 selects any one of "0.4, 0.2" excluding "0.6" which is the highest bit rate among them, and determines the selected bit rate as the bit rate candidate. In a case where any one of two or more bit rates is selected, for example, the bit rate determining unit 106 may consistently select the highest bit rate among them in a case where importance is placed on the resolution of the video or may consistently select the lowest bit rate among them in a case where importance is placed on the continuity of the video.

However, immediately after a video playback operation is received, since the segment data is not received yet, the bandwidth is not specified by the bandwidth specifying unit 104 yet. Further, since the segment data is not cached yet, the cache amount is neither specified by the cache amount specifying unit 103. In this regard, in a case where the playback is performed from the beginning of the video, the bit rate determining unit 106 determines the bit rate candidate without using the cache amount specified by the cache amount specifying unit 103 and the bandwidth specified by the bandwidth specifying unit 104 until an initial response period set as a period in which the determination method at the initial stage of the playback is used elapses.

In other words, the bit rate determining unit 106 determines the bit rate candidate based on only the size of the display region specified by the display region size specifying unit 102 until the initial response period elapses. For example, a period until the cache amount and the bandwidth are initially specified is set as the initial response period. Further, a period in which the specifying of the cache amount and the bandwidth is expected to be completed, which is set based on a record of a time required for the specifying, may be used as the initial response period.

In the initial response period, for example, the bit rate determining unit 106 selects any one of the bit rates in the bit rate range which is associated with the specified size of the display region in the bit rate table illustrated in Fig. 8, and determines the selected bit rate as the bit rate candidate. The bit rate determining unit 106 may select the highest bit rate from the range in a case where the importance is placed on the resolution of the video or may select the lowest bit rate from the range in a case where the importance is placed on the continuity of the video. The exemplary embodiment of the present invention is not limited to this, and, for example, in a case where the frame rate desired by the user is set in advance, the bit rate determining unit 106 may select a bit rate of a value obtained by multiplying the set frame rate by the specified size of the display region and a coefficient or a bit rate of a value closest to the value and determine the selected bit rate as the bit rate candidate.

In a case where the image quality of the video of the bit rate candidate determined by the above-described method (the method using the size of the display region, the cache amount, and the bandwidth) for a certain segment of the video satisfies a set image quality condition, the bit rate determining unit 106 determines the bit rate candidate as the bit rate of the segment. As the image quality condition, for example, a condition that is satisfied in a case where the image quality indicated by the acquired image quality information is equal to or larger than a threshold value Th4 and not satisfied in a case where the image quality indicated by the acquired image quality information is less than the threshold value Th4 is used.

For example, it is assumed that the threshold value Th4 = 0.75 is set, the image quality information illustrated in Fig. 6 is acquired, and the bit rate determining unit 106 determines 1.0 Mbps as the bit rate candidate in the second segment of the video. In this case, since the image quality of the second segment of the video of 1.0 Mbps is "0.79" and equal to or larger than the threshold value Th4, the bit rate determining unit 106 determines the image quality condition to be satisfied, and determines 1.0 Mbps as the bit rate of the video to be played back in the second segment without change.

Further, in a case where the image quality of the video of the bit rate candidate does not satisfy the image quality condition, the bit rate determining unit 106 determines a bit rate higher than that of the bit rate candidate as the bit rate of the segment. The bit rate higher than that of the bit rate candidate is an example of a "second bit rate" according to the exemplary embodiment of the present invention. For example, in the above-described example, the bit rate determining unit 106 determines 0.8 Mbps as the bit rate candidate in the second segment of the video. In this case, in a case where the image quality of the second segment of the video of 0.8 Mbps is "0.71" and less than the threshold value Th4, the bit rate determining unit 106 determines the image quality condition not to be satisfied, and determines 1.0 Mbps (the second bit rate in this case) higher than 0.8 Mbps as the bit rate of the video to be played back in the second segment.

Further, in a case where the image quality condition is not satisfied, the bit rate determining unit 106 determines the bit rate satisfying the image quality condition as the second bit rate. For example, it is assumed that the threshold value Th4 = 0.80 is set, the image quality information illustrated in Fig. 6 is acquired, the bit rate determining unit 106 determines 0.8 Mbps as the bit rate candidate in the second segment of the video. In this case, the bit rate determining unit 106 determines the image quality condition not to be satisfied since the image quality of the second segment of the video of 0.8 Mbps is "0.71" and less than the threshold value Th4.

1.0 Mbps and 2.0 Mbps are the bit rates higher than 0.8 Mbps, but the image quality (0.79) of the second segment of 1.0 Mbps is less than the threshold value Th4 and thus does not satisfy the image quality condition, and the image quality (1.00) of the second segment of 2.0 Mbps is equal to or larger than the threshold value Th4 and thus satisfies the image quality condition. In this regard, the bit rate determining unit 106 determines 2.0 Mbps (the second bit rate in this case) as the bit rate of the second segment.

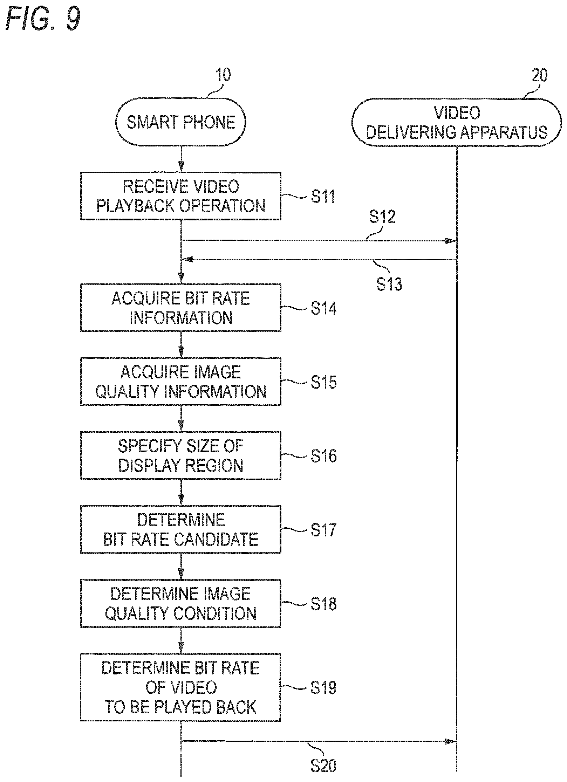

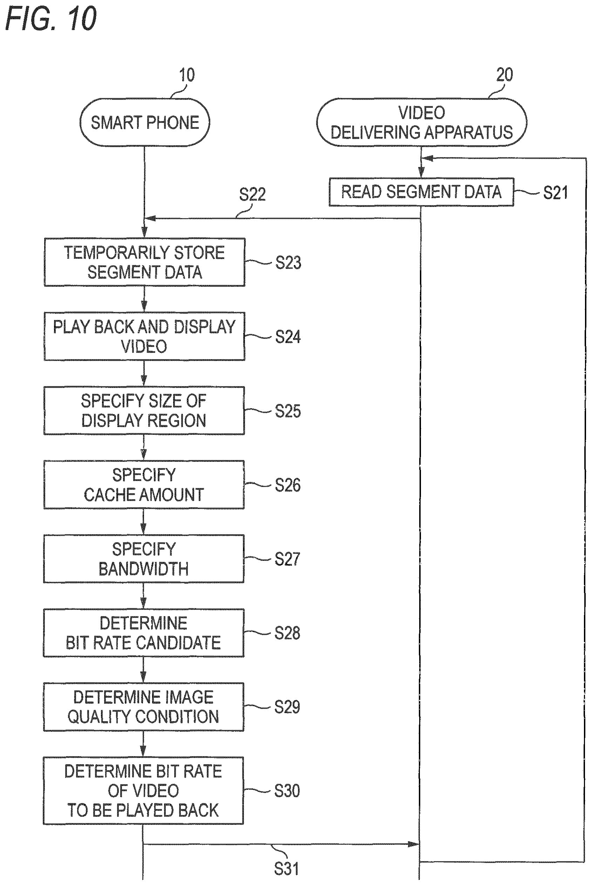

The respective apparatuses included in the video delivery system 1 perform a streaming delivery process on the video based on the above-described configuration. Next, an initial operation process until the bit rate of the video to be played back is first designated will be described with reference to Fig. 9, and a subsequent operation process will be described with reference to Fig. 10.

Fig. 9 illustrates an exemplary initial operation process in the streaming delivery process. In an example of Fig. 9, in a case where the user performs an operation (for example, an operation of selecting a link of the video) of causing the smart phone 10 to play back the video that is delivered in the streaming manner, the operation process starts.

First, the smart phone 10 receives the video playback operation (step S11). Then, the smart phone 10 (the bit rate information acquiring unit 101) requests the video delivering apparatus 20 to transmit the bit rate information of the video for which the playback operation is received (step S12). The video delivering apparatus 20 (the information transmitting unit 206) reads the requested bit rate information and the image quality information of the video, and transmits the bit rate information and the image quality information of the video to the smart phone 10 (step S13). The smart phone 10 (the bit rate information acquiring unit 101) acquires the transmitted bit rate information (step S14).

The smart phone 10 (the image quality information acquiring unit 105) acquires the transmitted image quality information (step S15). Then, the smart phone 10 (the display region size specifying unit 102) specifies the size of the display region of the video for which the playback operation is received (step S16). Then, the smart phone 10 (the bit rate determining unit 106) determines the bit rate of the video according to the specified size as the bit rate candidate (step S17). Then, the smart phone 10 (the bit rate determining unit 106) determines whether the image quality of the video of the determined bit rate candidate satisfies the image quality condition (step S18).

In a case where the image quality condition is satisfied, the smart phone 10 (the bit rate determining unit 106) determines the bit rate candidate as the bit rate of the video to be played back. In a case where the image quality condition is not satisfied, the smart phone 10 (the bit rate determining unit 106) determines a bit rate higher than the bit rate candidate as the bit rate of the video to be played back (step S19). Then, the smart phone 10 (the delivery requesting unit 107) requests the video delivering apparatus 20 to perform the streaming delivery of the video at the bit rate of the video to be played back determined in step S19 (step S20).

Fig. 10 illustrates an exemplary operation process after the initial bit rate is designated. The video delivering apparatus 20 (the segment data reading unit 207) reads the segment data indicating the video of the bit rate requested in step S17 (step S21). Then, the video delivering apparatus 20 (the segment data transmitting unit 208) transmits the segment data read in step S21 to the smart phone 10 (step S22). The smart phone 10 (the segment data receiving unit 108) receives the segment data transmitted in step S22.

The smart phone 10 (the temporary storage unit 109) temporarily stores the received segment data (step S23). Then, the smart phone 10 (the video playing-back unit 110) reads and plays back the segment data that is temporarily stored, and causes the segment data to be displayed on the display region (step S24). Then, the smart phone 10 (the display region size specifying unit 102) specifies the size of the display region of the played-back video (step S25). Then, the smart phone 10 (the cache amount specifying unit 103) specifies a data amount of the segment data that is temporarily stored, that is, the cache amount (step S26).

Then, the smart phone 10 (the bandwidth specifying unit 104) specifies the bandwidth in the reception of the segment data (step S27), Then, the smart phone 10 (the bit rate determining unit 106) determines the bit rate candidate based on the size of the display region specified in step S25, the cache amount specified in step S26, and the bandwidth specified in step S27 (step S28). Then, the smart phone 10 (the bit rate determining unit 106) determines whether the image quality of the video of the determined bit rate candidate satisfies the image quality condition (step S29).

In a case where the image quality condition is satisfied, the smart phone 10 (the bit rate determining unit 106) determines the bit rate candidate as the bit rate of the video to be played back In a case where the image quality condition is not satisfied, the smart phone 10 (the bit rate determining unit 106) determines a bit rate higher than the bit rate candidate as the bit rate of the video to be played back (step S30). Then, the smart phone 10 (the delivery requesting unit 107) requests the video delivering apparatus 20 to perform the streaming delivery of the video at the bit rate of the video to be played back which is determined in step S30 (step S31).

The video delivering apparatus 20 (the segment data reading unit 207) returns to step S21, and reads the segment data indicating the video of the bit rate requested in step S31. Thereafter, the operation of steps S21 to S31 is repeated until the user ends the playback operation or the video is played back up to the end, and so the playback of the video ends.

In this exemplary embodiment, the bit rate of the video to be played back is determined according to the image quality information. Thus, in a case where the image quality of the video of the bit rate candidate determined by the method using the size of the display region, the cache amount, and the bandwidth does not satisfy the image quality condition, the video having the better image quality is played back. For example, in a case where the bit rate is determined in view of only the bandwidth, the video that does not satisfy the image quality condition is played back. However, in this exemplary embodiment, the playback quality is improved to be higher than this case. Here, the playback quality refers to a comprehensive quality including the level of the resolution of the video and the playback continuity (in which the playback is not interrupted).

In this exemplary embodiment, the bit rate is determined using the image quality evaluated by comparing the videos with each other. Thus, it is more accurately indicated whether the image qualities of the videos are high or low than the case where the comparison is not performed. In this exemplary embodiment, in a case where the image quality condition is not satisfied, the video having the better image quality than that of the bit rate candidate is played back. Thus, the image quality of the video that is played back is improved to be higher than the case where the image quality information is not considered. At this time, the video satisfying the image quality condition is played back. In other words, the video of the image quality that does not satisfy the image quality condition is prevented from being played back.

### [2] Modified examples

The exemplary embodiment is merely an example of the present invention, and modifications can be made as follows. The exemplary embodiment and modified examples may be carried out in combination with each other as necessary.

### [2-1] Image quality evaluation method

The reference bit rate is not limited to the above-described exemplary embodiment. For example, in a case where the bit rate conversion from the original video is performed as in the exemplary embodiment, the original video may be used as the video at the reference bit rate. For example, in the example of Fig. 6, 2.0 Mbps is the reference bit rate, and the image quality of the video of 2.0 Mbps is 1.00 for all the segments, but in practice, the video is obtained by performing the bit rate conversion on the original video of 4.0 Mbps, and thus there is a difference in the image quality between the segments as in the other bit rates.

In the present modified example, 4.0 Mbps that is the original video is the reference bit rate, and thus there is a difference in the image quality between the segments even in the video of 2.0 Mbps. As described above, according to the present modified example, there is a difference in the image quality between the segments in all the videos obtained by performing the bit rate conversion on the original video.

### [2-2] Bit rate candidate determination method

The bit rate candidate determination method by the bit rate determining unit 106 is not limited to the above-described example. For example, the bit rate determining unit 106 may determine the bit rate candidate using one or two of the size of the display region, the cache amount, and the bandwidth. The bit rate determining unit 106 may determine the bit rate candidate using any other known method. In this case, the bit rate determining unit 106 preferably determines the bit rate of the image that is played back according to whether or not the image quality of the video of the bit rate candidate determined by using any method satisfies the image quality condition as in the exemplary embodiment.

### [2-3] Consideration of bandwidth

The bit rate determining unit 106 may further consider the bandwidth after determining the bit rate in view of the image quality. For example, in a case where the bit rate determined as a bit rate of a certain segment is higher than the bandwidth specified by the bandwidth specifying unit 104, the bit rate determining unit 106 determines a bit rate equal to or lower than the bandwidth as the bit rate of the segment again.

For example, the bit rate determining unit 106 is assumed to have determined 1.0 Mbps as the bit rate of the video to be played back according to the acquired image quality information, and the specified bandwidth is assumed to be 0.9 Mbps. In this case, the bit rate determining unit 106 determines 0.8 Mbps that is highest among the bit rates equal to or lower than 0.9 Mbps as the bit rate of the video to be played back again. Thus, the playback of the video is interrupted less than the case where the bandwidth is not considered.

### [2-4] Consideration of size of the display region

In a case where an image quality of a video of a bit rate candidate of a certain segment does not satisfy the image quality condition, the bit rate determining unit 106 determines the bit rate higher than the bit rate candidate as the bit rate of the segment, but at this time, the bit rate determining unit 106 may determine the bit rate according to the size of the display region.

For example, in a case where the specified size of the display region is equal to or larger than a threshold value Th5, the bit rate determining unit 106 determines a bit rate that is two step higher than the bit rate candidate (for example, 1.0 Mbps in a case where the bit rate candidate is 0.6 Mbps), and in a case where the size of the display region is less than the threshold value Th5, the bit rate determining unit 106 determines a bit rate that is one step higher than the bit rate candidate (for example, 0.8 Mbps in a case where the bit rate candidate is 0.6 Mbps).

In the playback of the video, unless the bit rate is changed, as the display region decreases, the resolution of the video increases. In other words, in a case where the display region is small, although the bit rate is low, the decrease in the resolution of the video is suppressed compared to the case where the display region is large. In the present modified example, in a case where the image quality condition is not satisfied, the bit rate corresponding to the specified size of the display region is determined, and thus compared to the case where the size of the display region is not considered, a phenomenon that, in a case where the display region is small, the video of the resolution higher than necessary is displayed, and the wireless communication band is compressed is suppressed.

### [2-5] Server apparatus

The bit rate may be determined by a server apparatus.

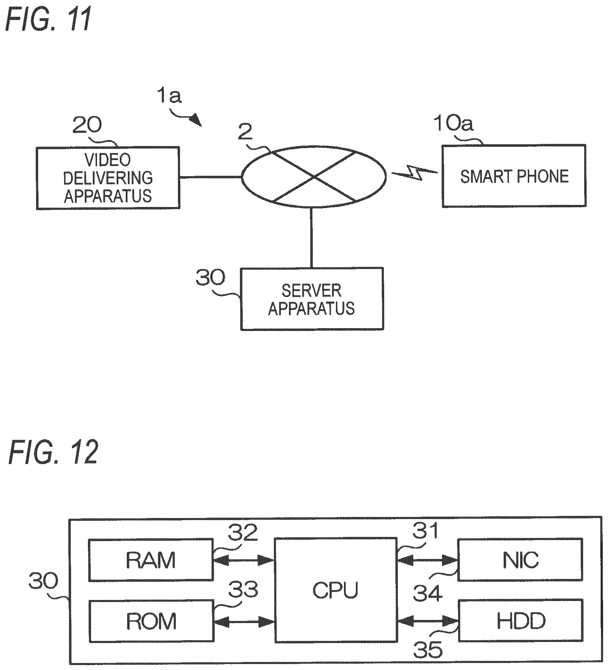

Fig. 11 illustrates an overall configuration of a video delivery system la according to the present modified example. The video delivery system 1a includes a communication line 2, a smart phone 10a, a video delivering apparatus 20, and a server apparatus 30.

Fig. 12 illustrates a hardware configuration of the server apparatus 30. The server apparatus 30 is a computer that includes a CPU 31, a RAM 32, a ROM 33, a NIC 34, and a HDD 35. The CPU 31 to the HDD 35 are the same hardware as the components having the same names illustrated in Fig. 4.

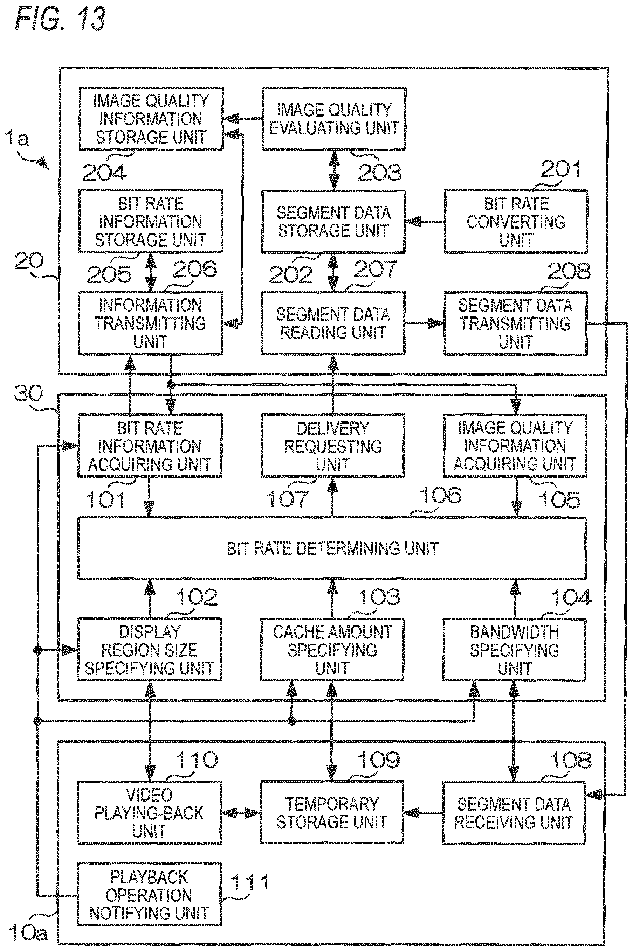

Fig. 13 illustrates functional configurations implemented by the respective apparatuses according to the present modified example. The smart phone 10a includes a playback operation notifying unit 111 in addition to the segment data receiving unit 108, the temporary storage unit 109, and the video playing-back unit 110 illustrated in Fig. 5. The server apparatus 30 includes the bit rate information acquiring unit 101, the display region size specifying unit 102, the cache amount specifying unit 103, the bandwidth specifying unit 104, the bit rate determining unit 106, and the delivery requesting unit 107 illustrated in Fig. 5.

In a case where the operation of playing back the video that is delivered in the streaming manner is performed on the smart phone 10a, the playback operation notifying unit 111 of the smart phone 10a gives a notification indicating that the operation is performed to the server apparatus 30. The notification is received by the bit rate information acquiring unit 101, the display region size specifying unit 102, the cache amount specifying unit 103, and the bandwidth specifying unit 104 of the server apparatus 30. In a case where the notification is received, the bit rate information acquiring unit 101 acquires the bit rate information, and the specifying units perform communication with the corresponding units of the smart phone 10a (the display region size specifying unit 102 performs communication with the video playing-back unit 110, the cache amount specifying unit 103 performs communication with the temporary storage unit 109, and the bandwidth specifying unit 104 performs communication with the segment data receiving unit 108), and start the specifying operation.

Thus, the bit rate determining unit 106 determines the bit rate, and the delivery requesting unit 107 requests the delivery of the video. At this time, the delivery requesting unit 107 sets the smart phone 10a as the delivery destination of the video, and makes the request. The segment data transmitting unit 208 of the video delivering apparatus 20 transmits the segment data of the requested video to the smart phone 10a. The video of the bit rate determined by the server apparatus 30 as described above is delivered to the smart phone 10a. In the present modified example, the server apparatus 30 determines the bit rate similarly to the smart phone 10 of the exemplary embodiment, and thus the bit rate is used such that the playback quality is improved to be higher than the case where the bit rate is determined in view of only the bandwidth.

### [2-6] Information processing apparatus

The information processing apparatus such as the determination apparatus that determines the bit rate or the playback apparatus that plays back the video is not limited to the smart phone or the server apparatus. For example, the information processing apparatus may be a tablet terminal, a laptop PC, or a desktop PC. The smart phone functions as both the determination apparatus and the playback apparatus, but the server apparatus functions as the determination apparatus but does not function as the playback apparatus and thus requests the video delivering apparatus to deliver the video of the determined bit rate to an external playback apparatus in the streaming manner.

### [2-7] Bit rate

In the exemplary embodiment, as the bit rate increases, the resolution of the video increases, and the frame rate increases as well. However, the present invention is not limited to this exemplary embodiment. For example, although the bit rate increases, only the frame rate may increase with no change in the resolution, or only the resolution may increase with no change in the frame rate.

### [2-8] Bit rate determining unit

In the exemplary embodiment, the bit rate determining unit 106 determines the bit rate selected from predetermined plural bit rates as the bit rate of the video to be played back, but the present invention is not limited to this exemplary embodiment. For example, in a case where a bit rate in a predetermined range is designated, and the video delivering apparatus has a function of performing a process of converting video at a reference bit rate that is stored to a video at a designated bit rate, the bit rate determining unit 106 may determine the bit rate within the predetermined range.

At this time, for example, the bit rate determining unit 106 may determine a value of the specified size of the display region, a value of the cache amount, or a value obtained by substituting a value of the bandwidth into a set formula as the bit rate. As a result, the streaming delivery of the videos at multilevel bit rates is performed compared to the case where the plural bit rates are determined in advance.

### [2-9] Image quality evaluation segment

In the exemplary embodiment, the image qualities of all the segments of the video are evaluated, but the present invention is not limited to this exemplary embodiment, and the image qualities of some segments may be evaluated, that is, the image qualities of one or more segments are preferably evaluated. In this case, the bit rate determining unit 106 determines the bit rate according to the image quality information for one or more segments whose image quality is evaluated, and thus the bit rate at which the playback quality is improved to be higher than the case where the bit rate is determined in view of only the bandwidth is used.

### [2-10] Category of invention

The present invention is applicable as the video delivering apparatus or the video delivery system including the video delivering apparatus in addition to the information processing apparatus such as the smart phone or the server apparatus. The present invention is applicable as an information processing method of carrying out the process implemented by the respective apparatuses and applicable as a program causing a computer controlling the respective apparatuses to operate. The program may be provided in the form of a recording medium such as an optical disk storing the program or may be provided in a form in which the program is downloaded to a computer via a communication line such as the Internet and installed for use.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
an acquiring unit (101) configured to acquire image quality information on a video a plurality of segments of which are sequentially delivered in a streaming manner and a bit rate of which is variable during a playback of the video, the image quality information indicating image qualities of one or more segment of the plurality of segments at each of a plurality of bit rates; and
a determining unit (106) configured to determine a bit rate of the one or more segment of the plurality of segments of the video that is played back according to the acquired image quality information; **characterised by**:
a video playing-back unit (110) configured to cause the played-back video to be displayed on a different display region according to an orientation of the information processing apparatus and according to a size of a video playback window defined on a display screen of the information processing apparatus; wherein
the determining unit (106) is configured to read a plurality of different, possible bit rates associated with the size of the display region from a bit rate table and to determine a first bit rate, from the read plurality of different, possible bit rates, in a predetermined manner as the bit rate of the one or more segments in a case where an image quality of the one or more segments of the video at the first bit rate satisfies a predetermined condition, wherein in the bit rate table size ranges of the display region are defined by multiple thresholds, and each size range of the display region is associated with a plurality of different, possible bit rates, and
the determining unit (106) is configured to determine a second bit rate higher than the first bit rate as the bit rate of the one or more segments in a case where the image quality of the one or more segments of the video at the first bit rate does not satisfy the predetermined condition, wherein the second bit rate is selected from the read plurality of different, possible bit rates associated with the size of the display region.

2. The information processing apparatus according to claim 1,
wherein the acquiring unit (101) is configured to acquire, as the image quality information, an evaluation value that is obtained by comparing an image quality of a segment of the video at a bit rate to be evaluated with an image quality of the segment of the video at a reference bit rate.

3. The information processing apparatus according to claim 2,
wherein the acquiring unit (101) is configured to acquire the image quality information in which a highest bit rate among the plurality of bit rates within which the bit rate of the video is variable while the video is delivered in the streaming manner is used as the reference bit rate.

4. The information processing apparatus according to claim 2,
wherein the video is provided with videos at a plurality of bit rates generated by a bit rate conversion on an original video, and
the acquiring unit (101) is configured to acquire the image quality information in which a bit rate of the original video is used as the reference bit rate.

5. The information processing apparatus according to claim 1,
wherein the determining unit (106) is configured to determine the second bit rate such that the predetermined condition is satisfied.

6. The information processing apparatus according to any one of claims 1 to 5, further comprising,
a specifying unit (104) configured to specify a bandwidth in receiving data of the video,
wherein, in a case where the bit rate determined as the bit rate of the one or more segments is higher than the specified bandwidth, the determining unit (106) is configured to redetermine a bit rate equal to or lower than the bandwidth as the bit rate of the one or more segments.

## Patentansprüche

1. Informationsverarbeitungsvorrichtung, die Folgendes umfasst:
eine Erfassungseinheit (101) , die dafür konfiguriert ist, Bildqualitätsinformationen über ein Video zu erfassen, von dem mehrere Segmente sequentiell in Streaming-Form übermittelt werden und dessen Bitrate während der Wiedergabe des Videos variabel ist, wobei die Bildqualitätsinformationen Bildqualitäten eines oder mehrerer Segmente der mehreren Segmente bei jeder von mehreren Bitraten anzeigen; und
eine Bestimmungseinheit (106), die dafür konfiguriert ist, eine Bitrate des einen oder der mehreren Segmente der mehreren Segmente des wiedergegebenen Videos gemäß den erfassten Bildqualitätsinformationen zu bestimmen; **gekennzeichnet durch**:
eine Videowiedergabeeinheit (110), die dafür konfiguriert ist zu veranlassen, dass das wiedergegebene Video gemäß einer Ausrichtung der Informationsverarbeitungsvorrichtung und gemäß einer Größe eines auf einem Bildschirm der Informationsverarbeitungsvorrichtung definierten Videowiedergabefensters auf einer anderen Anzeigeregion angezeigt wird; wobei
die Bestimmungseinheit (106) dafür konfiguriert ist, mehrere verschiedene, mögliche Bitraten, die mit der Größe der Anzeigeregion verknüpft sind, aus einer Bitraten-Tabelle zu lesen, und eine erste Bitrate aus den gelesenen mehreren verschiedenen, möglichen Bitraten in einer vorbestimmten Weise als die Bitrate des einen oder der mehreren Segmente zu bestimmen, falls eine Bildqualität des einen oder der mehreren Segmente des Videos bei der ersten Bitrate eine vorbestimmte Bedingung erfüllt, wobei in der Bitraten-Tabelle Größenbereiche der Anzeigeregion durch mehrere Schwellen definiert sind und jeder Größenbereich der Anzeigeregion mit mehreren verschiedenen, möglichen Bitraten verknüpft ist, und
die Bestimmungseinheit (106) dafür konfiguriert ist, eine zweite Bitrate, die höher als die erste Bitrate ist, als die Bitrate des einen oder der mehreren Segmente zu bestimmen, falls die Bildqualität des einen oder der mehreren Segmente des Videos bei der ersten Bitrate nicht die vorbestimmte Bedingung erfüllt, wobei die zweite Bitrate aus den gelesenen mehreren verschiedenen, möglichen Bitraten, die mit der Größe der Anzeigeregion verknüpft sind, ausgewählt wird.

2. Informationsverarbeitungsvorrichtung nach Anspruch 1,
wobei die Erfassungseinheit (101) dafür konfiguriert ist, als die Bildqualitätsinformationen einen Beurteilungswert zu erfassen, der durch Vergleichen einer Bildqualität eines Segments des Videos bei einer zu bewertenden Bitrate mit einer Bildqualität des Segments des Videos bei einer Referenzbitrate erhalten wird.

3. Informationsverarbeitungsvorrichtung nach Anspruch 2,
wobei die Erfassungseinheit (101) dafür konfiguriert ist, die Bildqualitätsinformationen zu erfassen, in denen eine höchste Bitrate unter den mehreren Bitraten, innerhalb derer die Bitrate des Videos variabel ist, während das Video in der Streaming-Form übermittelt wird, als Referenzbitrate verwendet wird.

4. Informationsverarbeitungsvorrichtung nach Anspruch 2,
wobei das Video mit Videos bei mehreren Bitraten bereitgestellt wird, die durch eine Bitratenkonvertierung an einem Originalvideo generiert werden, und
die Erfassungseinheit (101) dafür konfiguriert ist, die Bildqualitätsinformationen zu erfassen, in denen eine Bitrate des Originalvideos als Referenzbitrate verwendet wird.

5. Informationsverarbeitungsvorrichtung nach Anspruch 1,
wobei die Bestimmungseinheit (106) dafür konfiguriert ist, die zweite Bitrate so zu bestimmen, dass die vorbestimmte Bedingung erfüllt ist.

6. Informationsverarbeitungsvorrichtung nach einem der Ansprüche 1 bis 5, die des Weiteren Folgendes umfasst:
eine Spezifizierungseinheit (104), die dafür konfiguriert ist, eine Bandbreite beim Empfangen von Daten des Videos zu spezifizieren, wobei in einem Fall, in dem die Bitrate, die als Bitrate des einen oder der mehreren Segmente bestimmt wurde, höher ist als die spezifizierte Bandbreite, die bestimmende Einheit (106) dafür konfiguriert ist, eine Bitrate, die nicht höher als die Bandbreite ist, als die Bitrate des einen oder der mehreren Segmente neu zu bestimmen.

## Revendications

1. Appareil de traitement d'informations comprenant :
une unité d'acquisition (101) configurée pour acquérir des informations de qualité d'image sur une vidéo dont une pluralité de segments sont délivrés séquentiellement de manière continue et dont un débit binaire est variable pendant une lecture de la vidéo, les informations de qualité d'image indiquant des qualités d'image d'un ou plusieurs segments de la pluralité de segments à chacun d'une pluralité de débits binaires ; et
une unité de détermination (106) configurée pour déterminer un débit binaire des un ou plusieurs segments de la pluralité de segments de la vidéo qui est lu en fonction des informations de qualité d'image acquises ; **caractérisé par** :
une unité de lecture de vidéo (110) configurée pour amener la vidéo lue à être affichée sur une région d'affichage différente en fonction d'une orientation de l'appareil de traitement d'informations et d'une taille d'une fenêtre de lecture de vidéo définie sur un écran d'affichage de l'appareil de traitement d'informations ; dans lequel
l'unité de détermination (106) est configurée pour lire une pluralité de débits binaires possibles différents associés à la taille de la région d'affichage à partir d'une table de débits binaires et pour déterminer un premier débit binaire, à partir de la pluralité de débits binaires possibles différents lus, d'une manière prédéterminée en tant que débit binaire des un ou plusieurs segments dans le cas où une qualité d'image des un ou plusieurs segments de la vidéo au premier débit binaire satisfait à une condition prédéterminée, dans lequel, dans la table de débits binaires, des plages de tailles de la région d'affichage sont définies par plusieurs seuils, et chaque plage de tailles de la région d'affichage est associée à une pluralité de débits binaires différents possibles, et
l'unité de détermination (106) est configurée pour déterminer un second débit binaire supérieur au premier débit binaire en tant que débit binaire des un ou plusieurs segments dans un cas où la qualité d'image des un ou plusieurs segments de la vidéo au premier débit binaire ne satisfait pas à la condition prédéterminée, dans lequel le second débit est sélectionné parmi la pluralité de débits binaires possibles différents lus, associées à la taille de la région d'affichage.

2. Appareil de traitement d'informations selon la revendication 1,
dans lequel l'unité d'acquisition (101) est configurée pour acquérir, en tant qu'informations de qualité d'image, une valeur d'évaluation qui est obtenue en comparant une qualité d'image d'un segment de la vidéo à un débit binaire à évaluer avec une qualité d'image du segment de la vidéo à un débit binaire de référence.

3. Appareil de traitement d'informations selon la revendication 2,
dans lequel l'unité d'acquisition (101) est configurée pour acquérir les informations de qualité d'image dans lesquelles un débit binaire le plus élevé parmi la pluralité de débits binaires à l'intérieur duquel le débit binaire de la vidéo est variable lorsque la vidéo est diffusée en continu est utilisé comme débit binaire de référence.

4. Appareil de traitement d'informations selon la revendication 2,
dans lequel la vidéo est fournie avec des vidéos à une pluralité de débits binaires générés par une conversion de débit binaire sur une vidéo originale, et
l'unité d'acquisition (101) est configurée pour acquérir les informations de qualité d'image dans lesquelles un débit binaire de la vidéo d'origine est utilisé en tant que débit binaire de référence.

5. Appareil de traitement d'informations selon la revendication 1,
dans lequel l'unité de détermination (106) est configurée pour déterminer le second débit binaire de telle sorte que la condition prédéterminée soit satisfaite.

6. Appareil de traitement d'informations selon l'une quelconque des revendications 1 à 5, comprenant en outre,
une unité de spécification (104) configurée pour spécifier une bande passante lors de la réception de données de la vidéo,
dans lequel, dans un cas où le débit binaire déterminé en tant que débit binaire des un ou plusieurs segments est supérieur à la largeur de bande spécifiée, l'unité de détermination (106) est configurée pour redéterminer un débit binaire égal ou inférieur à la largeur de bande en tant que débit binaire des un ou plusieurs segments.
